Europäisches Patentamt

European Patent Office

Office européen des brevets

(19)

(11) Veröffentlichungsnummer : **0 345 430 B1**

(12) **EUROPÄISCHE PATENTSCHRIFT**

(45) Veröffentlichungstag der Patentschrift :
**12.06.91 Patentblatt 91/24**

(51) Int. Cl.$^5$ : **F02F 1/42, F02B 19/14**

(21) Anmeldenummer : **89106104.6**

(22) Anmeldetag : **07.04.89**

(54) **Zylinderkopf für luftverdichtende, selbstzündende Brennkraftmaschinen.**

(30) Priorität : **09.06.88 DE 3819656**

(43) Veröffentlichungstag der Anmeldung :
**13.12.89 Patentblatt 89/50**

(45) Bekanntmachung des Hinweises auf die
Patenterteilung :
**12.06.91 Patentblatt 91/24**

(84) Benannte Vertragsstaaten :
**AT FR GB IT SE**

(56) Entgegenhaltungen :
**EP-A- 251 835**
**DE-C- 658 534**
**US-A- 2 317 536**

(73) Patentinhaber : **DAIMLER-BENZ
AKTIENGESELLSCHAFT
Mercedesstrasse 136
W-7000 Stuttgart 60 (DE)**

(72) Erfinder : **Wagner, Wolf-Dietrich
Lebretstrasse 5
W-7000 Stuttgart (DE)**
Erfinder : **Klumpp, Rolf, Dr.
Lindenstrasse 33/1
W-7053 Kernen (DE)**
Erfinder : **Strobel, Wolfgang
Hahnstrasse 11
W-7064 Remshalden 1 (DE)**
Erfinder : **Brenker, Günter
Beim Wasserturm 51
W-7050 Waiblingen (DE)**

## Beschreibung

Die Erfindung bezieht sich auf einen Zylinderkopf für luftverdichtende, selbstzündende Brennkraftmaschinen mit mehreren Zylindern gemäß den Merkmalen im Oberbegriff des Patentanspruchs 1.

Aus der EP-A 00 62 143 ist es bei einem Zylinderkopf der gattungsgemäßen Bauart bekannt, die Nebenbrennkammern innen an einer Seitenwand des Zylinderkopf-Gehäuses anzubinden. Eine weitere Verbindung zu der im wesentlichen parallel zum Zylinderkopfboden verlaufenden Zylinderkopfdecke ist nicht gegeben. Hierdurch kann die Nebenbrennkammer kaum zur Steifigkeit des Zylinderkopfes beitragen.

Der Erfindung liegt die Aufgabe zugrunde, den bekannten Zylinderkopf so zu gestalten, daß einerseits eine steife Einbindung der Nebenbrennkammer in das Zylinderkopf-Gehäuse und andererseits eine kompakte Zylinderkopf-Bauform bei einfacher Montage erzielt wird.

Die Aufgabe ist erfindungsgemäß durch die im Kennzeichen des Patentanspruchs 1 angegebenen Merkmale gelöst.

Durch die erfindungsgemäße Gestaltung des Zylinderkopfes ergibt sich ein Gußverbund von Zylinderkopfboden und -decke über die Gehäuse der Nebenbrennkammern. Hierdurch werden die Nebenkammern versteift und gleichzeitig wirken die Gehäuse der Nebenbrennkammern als Stützsäulen, durch welche das Zylinderkopf-Gehäuse in sich weiter ausgesteift wird. Durch die Stützsäulen-Wirkung der Kammern ist es möglich, diese weitgehend freistehend im Kühlmittelraum anzuordnen, so daß zumindest eine gute Kühlung der Kammeroberteile durch eine allseitige Umströmung erreicht wird. Desweiteren eignen sich die Verbindungsstellen von Zylinderkopfdecke und Nebenbrennkammern zur Aufnahme einer Gewindebohrung für die Einspritzdüse, die damit innerhalb der Gehäuseumrisse angeordnet werden kann, wodurch eine kompakte Zylinderkopfausführung erzielt wird. Schließlich wird durch den schrägen Verlauf der Zylinderkopfdecke ein guter Ablauf des Schmieröls aus dem Steuerraum in das Kurbelgehäuse erzielt.

Gemäß den Merkmalen des Anspruchs 3 wird eine kompakte Ausführung des Zylinderkopfes erzielt.

Schließlich ergibt sich durch die Merkmale des Anspruchs 4 ein guter Zugang zu den Einspritzdüsen von außen, was die Montage und Wartungsarbeiten erheblich vereinfacht.

In der Zeichnung ist ein Ausführungsbeispiel der Erfindung dargestellt.

Es zeigen.

Figur 1 den erfindungsgemäßen Zylinderkopf in einem Querschnitt durch die Nebenkammer und

Figur 2 die Nebenbrennkammer in einem Längsausschnitt gemäß der Linie II-II aus Figur 1.

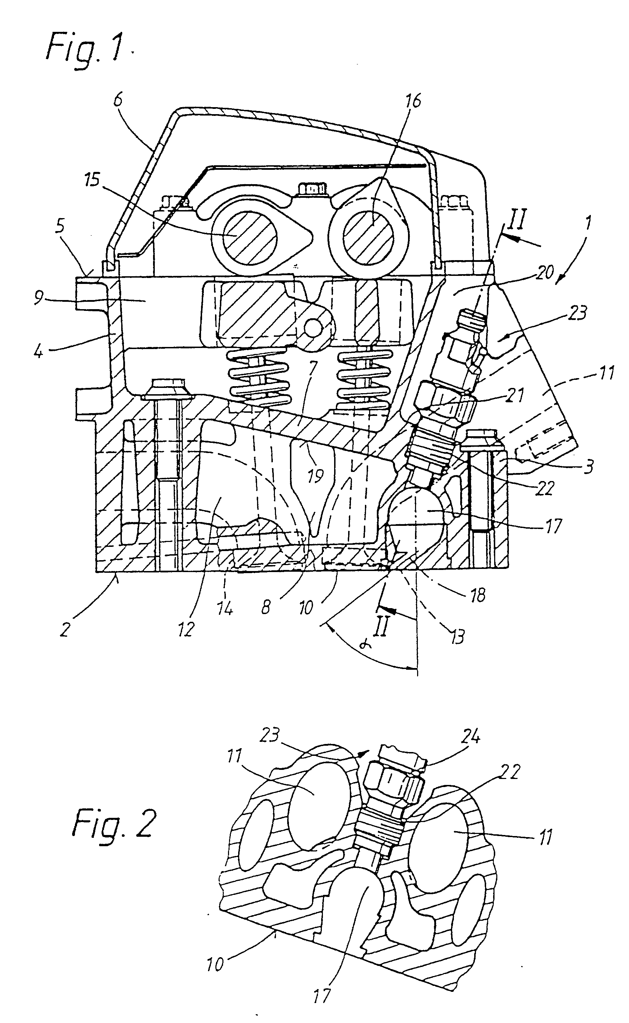

Ein Zylinderkopf 1 für eine luftverdichtende, selbstzündende Brennkraftmaschine mit mehreren Zylindern besteht aus einem einteiligen Gußstück und umfaßt einen Zylinderkopfboden 2, der von Gehäusewänden eingerahmt ist. In Figur 1 sind dabei die beiden seitlichen Gehäusewände 3 und 4 dargestellt, welche sich vom Zylinderkopfboden 2 bis zu einer Deckeltrennfläche 5 zur Auflage einer Zylinderkopfhaube 6 erstrecken. Mit Abstand vom Zylinderkopfboden 2 ist zwischen den Gehäusewänden eine Zylinderkopfdecke 7 eingezogen, welche einen Kühlmittelraum 8 von einem darüberliegenden Steuerraum 9 trennt. Diejenigen Bereiche des Zylinderkopfbodens 2, welche die Zylinderöffnungen abdecken, sind als Brennraumabschnitte 10 bezeichnet und enthalten die Mündungsöffnungen von Gaswechselkanälen.

Der erfindungsgemäße Zylinderkopf ist mit beispielsweise zwei Einlaß- und zwei Auslaßkanälen je Zylinder ausgerüstet. Die jeweils in Längsrichtung des Zylinderkopfes 1 nebeneinanderliegenden Einlaß und Auslaßkanäle durchsetzen den Kühlmittelraum in Zylinderkopfquerrichtung nach entgegengesetzten Seiten. In Figur 1 ist ein Einlaß- 11 und ein Auslaßkanal 12 durch gestrichelte Linien dargestellt. Der Einlaßkanal 11 erstreckt sich dabei von seiner Mündungsöffnung 13 aus in Richtung der Gehäusewand 3 und der Auslaßkanal 12 von seiner Mündungsöffnung 14 aus in Richtung der Gehäusewand 4. Die Mündungsöffnungen 13 und 14 sind mit Ventilsitzringen versehen und werden von Gaswechselventilen aus über zwei im Steuerraum 9 gelagerte Nockenwelle 15 und 16 gesteuert.

Im Zylinderkopf 1 ist für jeden Zylinder zwischen den Einlaßkanälen jeweils eine innerhalb der Zylinderquermittelebene und im Peripheriebereich der Brennraumabschnitte 10 liegende Nebenbrennkammer 17 eingegossen. Von den Nebenbrennkammern 17 führt je ein Brennkanal 18 unter einem Winkel α schräg in Richtung des Zylinders ab, der in einem zwischen den Mündungsöffnungen 13 der Einlaßkanäle 11 liegenden Stegabschnitt der Brennraumabschnitte 10 in die Zylinder mündet. Die Lage der Nebenbrennkammern 17 zwischen den Einlaßkanälen 11 ist dabei so gewählt, daß zumindest ihre Kammeroberteile ringsum von Kühlmittel umspült sind.

Die somit zumindest mit ihren kuppenförmigen Oberteilen im Kühlmittelraum 8 freistehenden Nebenbrennkammern 17 sind zur Versteifung mit der Zylinderkopfdecke 7 unmittelbar zusammengegossen. Um hierbei die Kühlung der Auslaßkanäle 12 nicht zu beeinträchtigen, ist die Zylinderkopfdecke 7 in Zylinderkopfquerrichtung schräg gestellt.

Entsprechend dem Verlauf der Auslaßkanäle 12 hat dabei die Zylinderkopfdecke 7 im Bereich der Gehäusewand 4 ihren größten Abstand vom Zylinderkopfboden 2, der sich zur Gehäusewand 3 hin stetig verringert. Die Neigung der schräg gestellten Zylinderkopfdecke 7 ist dabei so festgelegt, daß die Oberteile der Nebenbrennkammern 17 unmittelbar an die Unterseite 19 der Zylinderkopfdecke 7 angrenzt. Dadurch ergibt sich ein Gußverbund von Zylinderkopfdecke 7, Einlaßkanälen 11 und den Gehäusen der Nebenbrennkammern 17 mit dem Zylinderkopfboden 2, durch den insgesamt eine Erhöhung der Kopfsteifigkeit erzielt wird.

Die Gehäusewand 3 ist oberhalb der Nebenbrennkammern mit zum Steuerraum 9 gerichteten Ausformungen versehen. Hierdurch ergeben sich von außen zugängliche Nischen 20 mit nach außen freiliegenden Deckenabschnitten 21 der Zylinderkopfdecke 7 als Nischengrund. Die Deckenabschnitte 21 sind mit in die Nebenbrennkammern 17 ausmündenden Gewindebohrungen 22 versehen, in welchen die Einspritzdüsen 23 eingeschraubt sind. Der dabei in die Nischen 20 frei hineinragende Düsenkörper 24 liegt innerhalb der Umrisse des Zylinderkopf-Gehäuses, womit eine kompakte Bauweise erreicht wird.

## Ansprüche

1. Zylinderkopf (1) für luftverdichtende, selbstzündende Einspritzbrennkraftmaschinen mit mehreren Zylindern, bestehend aus
einem Zylinderkopfboden (2) mit im wesentlichen ebenen Brennraumabschnitten (10) ;
einem vom Zylinderkopfboden (2) bis zu einer Zylinderkopfdecke (7) reichenden Kühlmittelraum (8) ;
den Kühlmittelraum (8) von Mündungen (13, 14) in den Brennraumabschnitten (10) aus in Zylinderkopfquerrichtung nach entgegengesetzten Seiten durchsetzenden Einlaß- und Auslaßkanälen (11, 12) ;
zwischen den Einlaßkanälen (11) im Bereich des Umfangs der Brennraumabschnitte (10) angeordnete Nebenbrennkammern (17) ;
und von den Nebenbrennkammern (17) in Richtung der Brennraumabschnitte (10) abführende Brennkanäle (12), die in Hauptstegen zwischen den Mündungen (13) der Einlaßkanäle in die Brennräume (10) ausmünden, **dadurch gekennzeichnet,** daß die Zylinderkopfdecke (7) in Zylinderkopfquerrichtung zu den Nebenbrennkammern (17) hin derart schräg verläuft, daß die Nebenbrennkammern (17) mit ihren Oberteilen unmittelbar an die Zylinderkopfdecke (7) angrenzen.

2. Zylinderkopf nach Anspruch 1, **dadurch gekennzeichnet,** daß zumindest die Oberteile der Nebenbrennkammern (17) im Kühlmittelraum (8) freistehend angeordnet sind.

3. Zylinderkopf nach Anspruch 1 oder 2, **gekennzeichnet** durch von den Oberteilen her schräg in die Nebenbrennkammern (17) einmündende Gewindebohrungen (22) für Einspritzdüsen (23) deren Düsenkörper (24) von außen zugänglich innerhalb der seitlichen Gehäuseumrisse des Zylinderkopfes (1) liegen.

4. Zylinderkopf nach einem der Ansprüche 1 bis 3, **dadurch gekennzeichnet,** daß die oberhalb der Nebenbrennkammern (17) längsverlaufende Gehäusewand (3) mit Ausformungen zur Bildung von Nischen (20) versehen ist, in denen die Düsenkörper (24) der Einspritzdüsen (23) freistehend angeordnet sind.

## Claims

1. A cylinder head (1) for air-compressing, auto-ignition fuel injection internal combustion engines with a plurality of cylinders, consisting of
a cylinder head bottom (2) with substantially plane combustion chamber portions (10),
a coolant space (18) extending from the cylinder head bottom (2) as far as a cylinder head roof (7), inlet and outlet ports (11, 12) which traverse the coolant space (8) from openings (13, 14) in the combustion chamber portions (10) and in the opposite direction to the transverse direction of the cylinder heat, and with secondary combustion chambers (17) disposed between the inlet ports (11) in the region of the periphery of the combustion chamber portions (10) and, leading away from the secondary combustion chambers (17) in the direction of the combustion chamber portions (10), combustion ports (12) which discharge into the combustion chambers (10) in main webs between the mouths (13) of the inlet ports (11), characterised in that the cylinder head roof (7) extends in the transverse direction of the cylinder head obliquely in relation to the secondary combustion chambers (17) so that the upper parts of the secondary combustion chambers (17) are immediately adjacent the cylinder head roof (7).

2. A cylinder head according to claim 1, characterised in that at least the upper part of the secondary combustion chambers (17) are free-standing in the coolant space (8).

3. A cylinder head according to claim 1 or 2, characterised by, discharging from the upper parts obliquely into the secondary combustion chambers (17), screwthreaded bores (22) for injection nozzles (23), of which the nozzle bodies (24) are externally accessible within the lateral contours of the housing of the cylinder head (1).

4. A cylinder head according to one of claims 1 to 3, characterised in that the housing wall (3) which extends longitudinally above the secondary combustion chambers (17) is provided with recesses intended to form niches (20) in which the nozzle bodies (24) of the injection nozzles (23) are free-standingly disposed.

## Revendications

1. Culasse (1) pour moteurs à combustion interne, à injection, à auto-allumage et compression d'air et pourvus de plusieurs cylindres, comprenant :
   – un fond (2) de culasse comportant des parties (10) de volume de combustion sensiblement planes ;
   – un volume (8) pour agent de refroidissement s'étendant du fond (2) de culasse jusqu'à un plafond (7) de culasse ;
   – des canaux d'entrée (11) et de sortie (12) traversant le volume (8) pour agent de refroidissement, à partir d'embouchures (13, 14) dans les parties (10) de volume de combustion, dans une direction transversale de la culasse et vers les côtés opposés ;
   – des chambres secondaires de combustion (17) disposées entre les canaux d'entrée (11) dans la zone du pourtour des parties (10) de volume de combustion ; et
   – des canaux de combustion (18) partant des chambres secondaires de combustion (17) en direction des parties (10) de volume de combustion et qui débouchent dans des barrettes principales existant entre les embouchures (13) des canaux d'entrée dans les volumes de combustion (10),
   caractérisée en ce que le plafond (7) de culasse est orienté en oblique vers les chambres secondaires de combustion (17) dans une direction transversale de la culasse de telle sorte que les chambres secondaires de combustion (17) soient directement adjacentes, par leurs parties supérieures, au plafond (7) de la culasse.

2. Culasse selon la revendication 1, caractérisée en ce qu'au moins les parties supérieures des chambres secondaires de combustion (17) sont disposées librement dans le volume pour agent de refroidissement (8).

3. Culasse selon la revendication 1 ou 2, caractérisée par des trous filetés (22), débouchant, à partir des parties supérieures, en oblique dans les chambres secondaires de combustion (17), pour recevoir des injecteurs (23) dont les corps (24) sont situés, en étant accessibles de l'extérieur, à l'intérieur du contour latéral du carter de la culasse.

4. Culasse selon l'une des revendications 1 à 3, caractérisée en ce que la paroi du carter (3), s'étendant longitudinalement au-dessus des chambres secondaires de combustion (17), est pourvue de zones conformées pour former des niches (20) dans lesquelles sont disposés librement les corps (24) des injecteurs (23).

*Fig. 1*

*Fig. 2*